# EUROPEAN PATENT SPECIFICATION

(11) **EP 2 259 207 B1**
(45) Date of publication and mention of the grant of the patent: **17.10.2012**
(21) Application number: 09382086.8
(22) Date of filing: 02.06.2009
(51) Int. Cl.: G06K 9/32

(54) **Method of detection and recognition of logos in a video data stream**
Verfahren zur Erfassung und Erkennung von Logos in einem Videodatenstrom
Procédé de détection et de reconnaissance de logos dans un flux de données vidéo

(43) Date of publication of application: 08.12.2010
(73) Proprietor: Vicomtech-Visual Interaction and Communication Technologies Center, 20009 San Sebastian (ES)
(72) Inventor: Garcia Olaizola, Igor, 20009, SAN SEBASTIAN (ES); Aginako Bengoa, Naiara, 20009, SAN SEBASTIAN (ES); Labayen Esnaola, Mikel, 20009, SAN SEBASTIAN (ES)
(74) Representative: Carpintero Lopez, Francisco

(56) References cited:
- WO-A1-03/043311
- WO-A2-2008/107112
- US-A1- 2006 034 484
- BALLAN L ET AL: "Automatic detection of advertising trademarks in sport video" 4TH ITALIAN RESEARCH CONFERENCE ON DIGITAL LIBRARY SYSTEMS, XX, [Online] 24 January 2008 (2008-01-24), pages 83-88, XP008128257 Retrieved from the Internet: URL:http://canto.cab.unipd.it:8090/plone/i rcdl2008/papers/Automatic_detection.pdf> [retrieved on 2008-01-24]
- BOHUMIL KOVAR AND ALAN HANJALIC: "Logo detection and classification in a sport video: video indexing for sponsorship revenue control" STORAGE AND RETRIEVAL FOR MEDIA DATABASES 2002, vol. 4676, no. 1, 2001, pages 183-193, XP002606037 San Jose, CA, USA DOI: 10.1117/12.451090
- ARJUN JAIN ET AL: "A Novel Dynamic Rate Based System for Matching and Retrieval in Images and Video Sequences" COMPUTER SCIENCE AND SOFTWARE ENGINEERING, 2008 INTERNATIONAL CONFERENCE ON, IEEE, PISCATAWAY, NJ, USA, 12 December 2008 (2008-12-12), pages 556-560, XP031377794 ISBN: 978-0-7695-3336-0
- ALBIOL A ET AL: "Detection of tv commercials" ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA LNKD- DOI:10.1109/ICASSP.2004.1326601, vol. 3, 17 May 2004 (2004-05-17), pages 541-544, XP010718246 ISBN: 978-0-7803-8484-2
- DOERMANN D ET AL: "APPLYING ALGEBRAIC AND DIFFERENTIAL INVARIANTS FOR LOGO RECOGNITION" MACHINE VISION AND APPLICATIONS, SPRINGER VERLAG, DE, vol. 9, no. 2, 1 January 1996 (1996-01-01) , pages 73-86, XP000199795 ISSN: 0932-8092
- LIENHART R ED - ROSENFELD A ET AL: "VIDEO OCR: A SURVEY AND PRACTITIONER'S GUIDE" 1 January 2003 (2003-01-01), VIDEO MINING; [KLUWER INTERNATIONAL SERIES IN VIDEO VIDEO COUMPUTING], NORWELL, MA : KLUWER ACADEMIC PUBL, US, PAGE(S) 155 - 184 , XP009046500 ISBN: 978-1-4020-7549-0 * Section 6.1.3; page 167 - page 171; figure 6.6 *
- YUN-TA TSAI ET AL: "CDIKP: A highly-compact local feature descriptor" 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8 December 2008 (2008-12-08), pages 1-4, XP031411692 ISBN: 978-1-4244-2174-9
- KIENAST G ET AL: "Direct-info A media monitoring system for sponsorship tracking" 20050101, [Online] 1 January 2005 (2005-01-01), pages 1-8, XP008128256 Retrieved from the Internet: URL:http://mmis.doc.ic.ac.uk/mmir2005/DIRE CT-INFO.pdf> [retrieved on 2005-01-01]

## Description

### Field of the Invention

The present invention applies to the field of television and advertising. More specifically, the present invention relates to a method of detection and recognition of logos in video broadcasts.

### Background of the Invention

Advertising and television have always been closely linked, advertising being one of the main sources of income in television broadcasts. However, this business model is undergoing huge changes which are even destabilizing the accounts of television channels.

There are different factors which are causing this substantial change in the television advertising business. On one hand, the introduction of digital television allows developing systems capable of identifying commercials such that they can be directly eliminated from recordings. For example, US 6,100,941 A discloses a method of detection of video segments corresponding to commercials, using, among other parameters, fade to black frame detection.

On the other hand, the proliferation of television channels is enormous. New DVB-T (Digital Video Broadcasting Terrestrial) channels, new options such as Imagenio, Internet channels, Video On Demand services, etc. must be added to the offer of analog television, satellite or cable channels. This enormous fragmentation reduces the value of commercials, diverting the value of advertising towards the televised contents themselves instead of towards the commercial breaks characteristic of each broadcast of said contents. This is due to the fact that the linearity of the broadcasts is broken in many cases, whereas the same content can be offered by several channels or on several occasions.

New solutions and new business models able to continue providing a profit to broadcasters and producers must be conceived against these changes. Pay channels are a classic way to subsist economically, avoiding a strong dependence on commercial breaks. Better service is thus offered. However, it has been seen that the mass of users is not enough to support a large number of such companies, since television viewers do not tend to subscribe to more than one provider.

As a result, and given the lack of efficiency of commercial breaks in this new environment, there is a growing trend to insert advertising directly in the contents. This is known as Product Placement. It is thus assured that the product will be associated to the contents, which changes the business model. Time slots are no longer valued as highly, but rather the assessment of the content itself is what sets the price for the commercials which are inserted therein. However, this means of advertising products introduces certain technical difficulties when evaluating the duration of brand advertisements in broadcasts. As they are integrated in the rest of the broadcast image and are not part of a pre-calculated temporal planning, it is not so easy to determine when a brand logo is inserted.

There are currently a large number of lines of research in the field of Artificial Vision addressing these issues. As a result, there are various solutions for the processing, analysis, segmentation and tracking of image patterns, which is the main objective when finding a specific logo in a scene. However, as occurs in most of the lines relating to artificial intelligence, multipurpose intelligent systems cannot be developed today. Only expert systems achieve satisfactory results, those systems in which knowledge of the problem to be addressed is reduced and can be transmitted to the system. This means that for each case it is necessary to develop, or in the best case scenario, adapt systems because it is impossible to implement a multipurpose solution. W00045291 describes, for example, a system based on the search for images containing text patterns stored in a database, information which can be used to classify the frames and detect commercials.

Other examples of prior art documents include :
L. Ballan, M. Bertini, A. Del Bimbo, and A. Jain, "Automatic Trademark Detection and Recognition in Sport Videos," in Proc. of IEEE International Conference on Multimedia & Expo (ICME), Hannover, Germany, 2008.
Bohumil Kovar and Alan Hanjalic, "Logo detection and classification in a sport video: video indexing for sponsorship revenue control", Proc. SPIE, Storage and Retrieval for Media Databases 2002.

However, for a detection of logos integrated in a scene, a robust system which is able to automatically detect multiple logos in an uncontrolled environment, in which the position, luminosity or perspective of said logo are unknown, is necessary. It is also necessary for the method to involve a controlled computational load to avoid collapses and to allow working in real time.

### Summary of the invention

The present invention solves the aforementioned problem by means of a method of detection of logos in a video data stream which speeds up the location of said logos on the basis that most logos have a regular geometric shape, within which there is inscribed the characteristic design of each brand. By searching for logos exclusively within said geometric shapes, the computational load of said search with respect to other earlier, more general location systems is reduced, allowing the present invention to work in real time.

To that end, the method first samples frames of the video data stream with a certain sampling frequency. For each frame sampled by the method, those areas within the frame having a regular geometric shape are located first. Then, each image contained in one of these areas is characterized by means of a set of parameters which are stored in a vector of feature parameters. These parameters are compared with a database containing vectors with reference values of said parameters, previously calculated for each of the logos which are to be located. This comparison, which involves the calculation of a distance between vectors, allows determining if the image contained within said regular geometric shape corresponds with any of the logos the parameters of which are included in the database.

Preferably, to facilitate the task of the geometric figure location algorithms, and to optimize their result, the sampled frames are pre-processed by means of edge enhancement and noise reduction filters. Also preferably, for the purpose of providing a final report to the user, every time a logo is detected in a frame, information relating to which logo is detected, as well as information as to its instant of appearance in the video data stream is stored in a file.

Preferably, to enable the method to work in real time, being adapted to the processing time of the system and without causing data saturation, the method of the invention contemplates a dynamic modification of the frame sampling frequency depending on the time required by the operator to perform the different steps of the method. Regardless of said sampling frequency, the method preferably samples at least one frame of each scene of the video data stream the duration of which exceeds a pre-determined threshold for the purpose of not losing information relating to any scene when the sampling frequency is very low, avoiding at the same time extracting information from scenes the duration of which is so brief that the information they contain is unnoticeable for the user.

The geometric shapes which the method must locate are preferably circles, ellipses, and rectangles, preferably in this same order to optimize the computational load generated by said searches upon eliminating, by means of the first searches, candidates for the following searches, which are more difficult in terms of computational load.

With regard to the parameters which are used to characterize the images and the logos, they preferably comprise, without excluding other possible parameters, a subgroup or all of the following parameters:
- An indicator of the geometric shape of the segmented area.
- Mean and variance values for the colors of the pixels contained in the segmented areas. Each color is defined by a series of parameters within a color space (for example, the values of the red, green and blue channels in the RGB space or of the intensity in a black and white image). These mean and variance values are preferably not obtained as a whole for the entire surface of the logo or image, but rather said surface is previously divided into a set of regions the color of which is characterized individually.
- A measure of the entropy of the image.
- Descriptors of feature points determined by a SIFT (Scale-Invariant Feature Transform) algorithm. Each descriptor is stored in a vector, the number of elements of which is reduced by means of applying a principal component analysis (PCA). This reduction allows reducing the processing time of the step of comparing feature parameters in that the most relevant part of the extracted information by means of the SIFT algorithm is conserved with a lower number of elements.
- A relation between the surface and the perimeter of the logo or segmented area.

Greater weight is preferably given to the indicator of the geometric shape when performing the comparison with the patterns of the database.

The described method therefore allows a computationally efficient detection of logos, and it makes use of the usual features of said logos for their characterization, allowing it to work in real time on a video stream. These and other advantages will be apparent in view of the detailed description of the invention.

### Brief Description of the Drawings

For the purpose of aiding to better understand the characteristics of the invention according to a preferred practical embodiment thereof and in order to complement this description, the following figures are attached as an integral part thereof, having an illustrative and non-limiting character:
Figure 1 shows a general scheme of the method according to a preferred embodiment of the present invention.
Figure 2 shows in detail the results of a specific example of application of the method on a frame of a video data stream.

### Detailed Description of the Preferred Embodiments

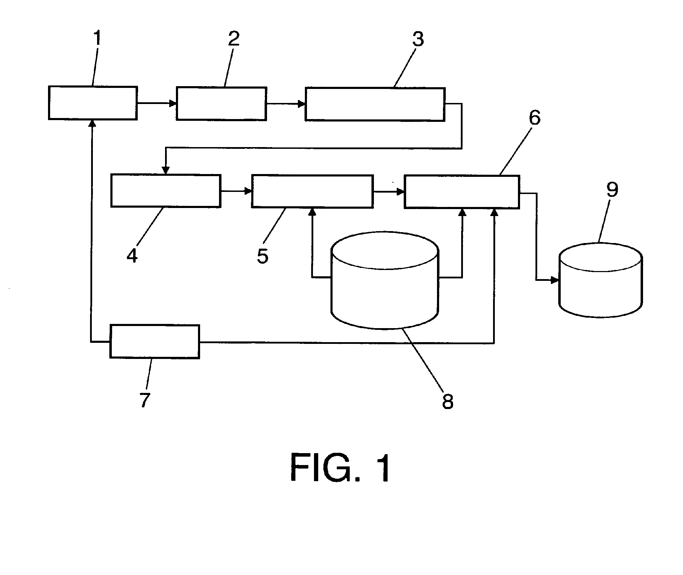

Figure 1 shows a general scheme of the steps of the method of detection and recognition of logos of the invention according to a preferred embodiment thereof. Said steps are performed sequentially by the following modules of a system also according to a preferred embodiment thereof:
- Capture module, which implements the step of sampling 1 frames of the video data stream with a sampling frequency
- Filtering module, which implements the step of pre-processing 2 the sampled frames, such that the images are prepared for a more successful and computationally efficient processing in the following step by means of noise reduction and edge enhancement filters.
- Segmentation module, which implements the step of segmenting 3 areas with regular geometric shapes.
- Parameter extraction module, which performs the step of extracting 4 feature parameters from each image contained in said regular shapes.
- Classification module, which performs the step of determining 5 whether said images correspond with any logo the parameters of which are contained in a database of the system.
- Indexing module, which performs the step of storing 6 the result of the classification in storage means 9, for example a register.
- Time management module, which performs the step of time management 7 in which the sampling frequency is dynamically modified so that the system works in real time.

The mentioned steps are described below in detail.

The necessary number of frames per second to be analyzed so that the system can work in real time is defined in the capture module. In a preferred embodiment in which the method of the present invention is applied to the case of digital television, I-type frames are the most appropriate for being used in the extraction of logos since they are those which have the lowest number of errors. In another preferred embodiment, in addition to these frames, intermediate frames (B) can also be introduced between the I-frames in order to obtain a more precise result since a better extraction of the regions of interest is thus observed.

In order to be able to adapt the images for the step of segmenting images, the filtering module performs a pre-processing to remove most of the noise from the image and extract the edges from the image. The image is then binarized in order to be able to obtain a contour definition that is adapted to the needs of the system. Mainly due to the phenomena known as blurring, which is the noise introduced by the movement occurring between continuous frames of the video, said pre-processing of the image is complicated in the case of images extracted from a video signal and it becomes a very important part of the method of the present invention. Therefore algorithms are applied to reduce such noise due to the movement. Anisotropic filtering is first applied to smooth the edges of the image and thus reduce the noise of the images extracted from the videos.

Then each of the channels of the image (for example, the YUV color space, which includes one luminance value and two chrominance values, is used in television) is taken and the Sobel operator is applied to detect the edges in each of them. The edges of each of the channels are considered as an edge of the image and a binary image representing all the pixels belonging to the edges is formed. Thus, after pre-processing the image, an edge image is obtained in which most of the edges of the image are present. This image is still not suitable for segmenting regions of interest. It is therefore necessary to perform further processing. In this processing, morphological operations known by those skilled in the art, such as erosion and dilation, are applied to obtain a more defined edge image. A hybrid median filter can also be applied to disregard isolated pixels which do not belong to the edge of an object. Finally, the image is filled in order to be able to establish the main areas of the image and to thus define the contours of said areas, which will be the contours from which the logos of the images will be extracted.

The element identified as possible logo is extracted or segmented in the segmentation module. To that end, it is considered that the logos, which are generally easily and simply identified by people, are designed as a regular shape with text or other motifs in it. Therefore, the segmentation algorithms are precisely regular shape extraction algorithms. Circles, ellipses and rectangles have been detected, as they are the most frequent regular shapes in the design of logos.

This segmentation of regular shapes is performed sequentially. Given that circles are specific cases of ellipses, circles are segmented first, excluding the contour of these objects once they are segmented, and then ellipses are detected. Finally rectangles are segmented. Contours which can lead the rectangle detection algorithm to confusion are thus extracted from the image. This is due to the fact that the contours of circles and ellipses can be considered as lines and therefore be analyzed as candidates for forming a rectangle. For each possible region of interest, an output is given in which the position of this region is indicated with respect to the image and the regular shape which defines it, in order to thus be able to use this information as yet another characteristic in the classification.

The Hough Transform is applied for the detection of circles. Said transform is applied in the binary image which is obtained after processing the image in the filtering module. The Hough transform is based on the idea that each line perpendicular to the tangent straight line of each point of a circumference passes through the center of said circumference. Thus, if the perpendicular lines of each point of the contour image are calculated, points with very high intensity values will appear in the places in which the centers of the circles are located.

Once all the possible points for the centers of the circumferences are accumulated, a threshold is applied so that only the possible centers in which a minimum number of points of the binarized image contribute. More or less perfect circles are detected depending on this threshold. For the case at hand, said threshold is not very restrictive since the contouring of the image may not be optimal and therefore imperfect circumferences are accepted.

For the detection of ellipses, a possible algorithm starts from a closed contour image defining the possible objects of the image. To define the location of the center of an ellipse, it is enough to choose three of its points the tangents of which are not parallel. These three points are paired in two groups and the intersection of their tangents is sought. If said point of intersection is joined with the mid-point of the straight line joining the two points, a straight line is defined in which the center of the ellipse is located. If this straight line is calculated for each of the two groups, the intersection between these two straight lines is the center of the ellipse. Based on this property of the ellipse, possible centers for the ellipses are defined, based on which it is determined whether the segmented object is an ellipse or not.

Finally, for the detection of rectangles, the definition of a rectangle as a parallelogram the sides of which form right angles with one another is taken as the starting point. The image is segmented based on this characteristic. The first step is to find straight lines that can form a rectangle. Once these straight lines are detected, it is necessary to check if these segments can form a rectangle, depending on the angle formed between them and on their situation.

The Hough transform, which converts segments of the original coordinate space into points in the Hough plane, can be used for the detection of the segments in the binary contour image. Once the possible segments of the image are detected, they are clustered depending on the angle value with respect to the x-axis. This clustering takes into account both the segments parallel to one another and perpendicular segments.

The segments are clustered by always taking the perpendicular segment located at the least distance until forming a quartet. Once the segments are clustered, it is analyzed which segments can belong to one and the same rectangle and which cannot. For each group, the distance between the centroid of the possible rectangle created by the candidate segments and the mid-point of the latter is calculated first. If said distance does not exceed a threshold, it is considered that the segments can form a rectangle. In the event that said threshold is exceeded, this group of segments does not create a rectangle.

Once the centroid is checked, the vector product of the contiguous segments is analyzed. If all the vector products have the same sign, these four segments are no longer candidate segments and are considered the sides of a rectangle. This check assures that the candidate segments delimit a closed area.

Once all the segment quartets are analyzed, trios are taken and the fourth segment is searched for in the image in order to be able to face possible errors in the detection of the segments. In the event that said line is not found, this fourth segment is determined from the other three. For the determination of whether they form a rectangle, the same process is performed as in the case of having the four segments. In order to be able to define the rectangle, the points of intersection of the segments are found and its sides are redefined.

Once the segmentation process has ended, feature parameters are extracted from the segmented image in the next step. Based on the results obtained for the extraction of feature parameters from each segment, the feature parameter extraction module creates a vector which will be the identifier of the logo for the step of classification. In a preferred embodiment of the present invention, the feature parameters extracted in this step are:
- The shape, indicating whether it is a circle, an ellipse or a rectangle.
- The color, by means of calculating the mean and variance of the channels of a color space (for example, the YUV color space, which includes one luminance value and two chrominance values, is used in television). Said channels determine the color of each pixel of the image. In a preferred embodiment, the parameters relating to the color are extracted in a plurality of areas within the image or logo, said areas being separated depending on their entropy value, which is a statistical measure used to characterize the texture of an image, and which represents a measure of the disorder or complexity of said image. For example, an image which is entirely black or entirely white has zero entropy. The calculation of entropy is based on the levels of gray of each of the channels forming the image. The images with a greater number of levels have higher entropy.
- The entropy calculated for the entire segmented image.
- The area-perimeter relation, which is an invariant relation with respect to the various geometric transformations an image may experience.
- The extraction of feature points of interest, performed by means of the known SIFT algorithm, which is a method for detecting and extracting descriptors of local features from the images, detailed in detail in US 6,711,293 B1. These points of interest are invariant with respect to the rotation and change of scale of the image; and partially invariant with respect to the noise in the image and the changes in the lighting and perspective. These points of interest are the local extremes of the differences of the images filtered with Gaussian filters at several scales. Once these points are detected, descriptors are used to characterize each point. These descriptors are built by assigning an orientation and magnitude to the points next to the points of interest.

In a preferred embodiment, said descriptors are stored in vectors, which are subsequently subjected to PCA analysis. PCA analysis is a statistical technique for the synthesis of the information, or reduction of the dimension, explained, for example, in *"A Tutorial on Principal Component Analysis",* by Jonathon Shlens. The objective is to reduce the number of variables to a lower number, losing the least amount of information possible. The new principal components or factors will be a linear combination of the original variables, and they will furthermore be independent of one another.
The dimension of the descriptor is reduced with PCA, thus reducing the processing time of the step of comparison. In a non-limiting example, it is possible to go from 128 elements in the descriptor obtained by means of the SIFT algorithm to 20 elements, achieving suitable characterization with a lower computational cost.

Based on the similarity of these feature parameters with the same feature parameters of reference logos, it is possible to determine in the classification module which logo is the possible logo detected or whether, in contrast, it cannot be considered a logo. To that end a classification vector is created which consists of a numerical value vector incorporating the information of the described parameters (shape, entropy, color, area-perimeter relation, SIFT feature points), various weights being able to be assigned to said parameters when performing the classification. In an even more preferred embodiment, the greater weight is assigned to the value of the shape, since it is one of the identifiers of the logo.

The comparison with the parameters of the reference logos is performed using this vector. To that end a distance between the vector calculated for the segmented image and the vectors of the database 8 containing the same parameters calculated for the logos which are desired to be known is calculated. The smallest distance will determine the logo contained in the segmented image, provided that said distance does not exceed a certain pre-established threshold. If the distance exceeds said threshold, it is considered that the segmented image does not correspond to any logo.

The times each logo appears are counted in the indexing module and said information is stored in a result register for subsequently extracting the stored information.

Working in real time is important in the method according to the invention to avoid collapses given that it is intended to work continuously. To that end, the time elapsed between the step of capturing 1 frames and a final step of the method, indicative of the total run time, and which can be both the step of determining 5 whether the images correspond with logos, or the step of storing 6 the final result of the recognition of logos, is observed in the time management module; and the sampling frequency is modified such that the number of frames extracted with said sampling frequency can be processed in the time observed without the system collapsing.

In order not to lose information of any scene when the sampling frequency is too low, the video capture module preferably incorporates means for detecting changes in scene by means of the comparison of the degree of similarity between frames, such that at least one image from each scene is sampled, provided that said scene is longer than a certain threshold duration thereby enabling to discard scenes that are too short the information of which is not noticeable for the user.

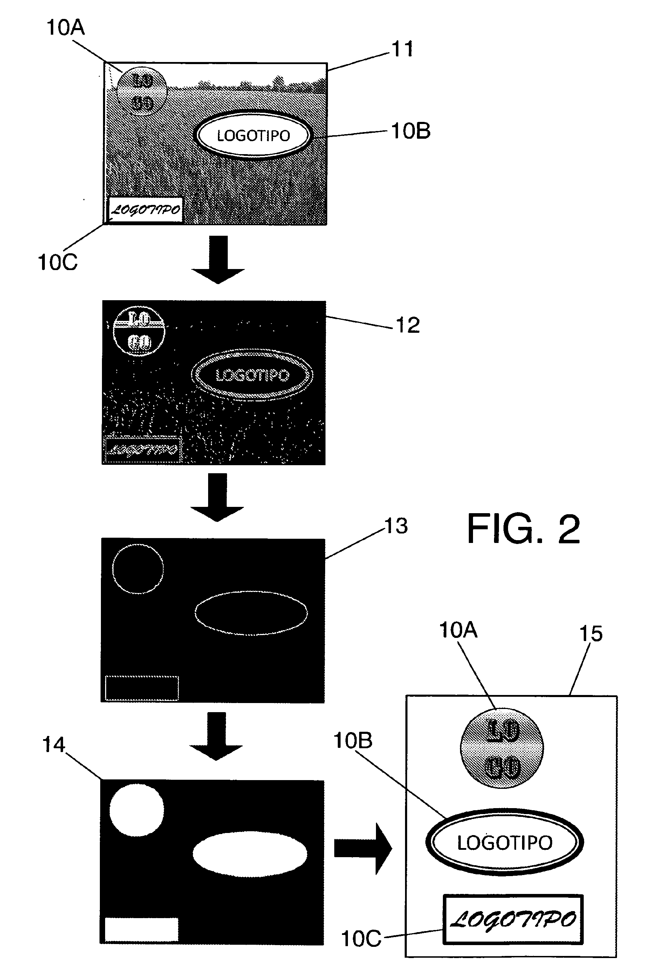

Figure 2 shows a specific example of application of the method to a sampled frame 11 containing three logos 10A, 10B and 10C integrated in the image of the frame.

The pre-processed image 12 shows the same sampled frame 11 after applying a pre-processing which enhances the edges of the image and binarizes it. The processed image 13 has the same pre-processed image 12 after a further processing according to the techniques described in the present description which allow eliminating points on which the geometric figure detection algorithms are to be run for the purpose of reducing the computational load of said algorithms.

The segmented image 14 has the result of applying the segmentation algorithms to the processed image 13, thus locating the geometric figures contained in the original sampled frame 11. The content of said geometric figures is extracted in 15 such that the extraction of parameters and subsequent identification of the logos 10A, 10B and 10C can then be performed.

## Claims

1. Method of detection and recognition of logos in a video data stream comprising the step of:
- sampling (1) frames of the video data stream with a sampling frequency;
**characterized in that** it comprises the steps of:
- for each sampled frame, segmenting those areas within the frame having a regular geometric shape
- for each segmented area, generating (4) a vector of feature parameters the elements of which are numerical values having feature parameters extracted from an image comprised in said segmented area in said sampled frame;
- determining (5) whether said image comprised in said segmented area corresponds to a logo depending on the distance between said vector of feature parameters of said image and a set of vectors the elements of which are numerical values of said feature parameters extracted for each logo from a set of reference logos, said set of vectors being stored in a database (8),
where the step of sampling (1) includes a step of time management which dynamically modifies the sampling frequency depending on a time elapsed between the step of sampling frames and the step of determining whether the images comprised in the segmented areas correspond to a logo.

2. Method according to claim 1, **characterized in that** it further comprises a step of pre-processing (2) of the sampled frames by means of edge enhancement and noise reduction filters, prior to the step of segmenting the areas with regular geometric shapes.

3. Method according to any of claims 1 to 2, **characterized in that** it further comprises a step consisting of storing (6) in storage means (9), for each frame in which it is determined that an image comprised in a segmented area of said frame corresponds to a logo, a name of said logo and a time code indicating a time in which said frame appears in the video data stream.

4. Method according to claim 3, **characterized in that** it further includes a step of time management (7) which dynamically modifies the sampling frequency depending on a time elapsed between the step of sampling (1) frames and the step of storing (6) in storage means (9) the name of the logo and the time code.

5. Method according to any of the previous claims, **characterized in that** in the step of sampling (1) frames, at least one frame of each scene of the video data stream is sampled, the duration of which is greater than a duration threshold.

6. Method according to any of the previous claims, **characterized in that** in the step of segmenting (3) areas with regular geometric shapes, said areas with regular geometric shapes are at least areas in the shape of circles, ellipses and a rectangles.

7. Method according to claim 6, **characterized in that** in the step of segmenting (3) areas with regular geometric shapes, the areas in the shape of circles are segmented first, the areas in the shape of ellipses second, and the areas in the shape of rectangles third.

8. Method according to any of the previous claims, **characterized in that** in the step of generating (4) a vector of feature parameters, said feature parameters of the images comprised in the segmented areas comprise an indicator of the geometric shape of the segmented area.

9. Method according to claim 8, **characterized in that** in order to calculate the similarity between the feature parameters of the images comprised in the segmented areas and reference values of the same feature parameters for logos of market brands comprised in a database (8), a weight is assigned, when performing the classification to determine which logo is a possible logo detected in the segmented area, to said indicator of the geometric shape of the segmented area that is greater than weights assigned to the remaining feature parameters of said image,.

10. Method according to any of the previous claims, **characterized in that** in the step of generating (4) a vector of feature parameters, said feature parameters of the images comprised in the segmented areas comprise mean and variance values of parameters defining a color of pixels comprised in said segmented areas.

11. Method according to any of the previous claims, **characterized in that** in the step of generating (4) a vector of feature parameters, the feature parameters extracted from the images comprised in the segmented areas comprise a measure of the entropy of said image.

12. Method according to any of the previous claims, in the step of generating (4) a vector of feature parameters, **characterized in that** said feature parameters of the images comprised in the segmented areas comprise vectors containing descriptors of feature points of said images obtained by means of a SIFT algorithm, the dimension of said vectors containing descriptors being reduced by means of a principal component analysis.

13. Method according to any of the previous claims, **characterized in that** in the step of generating (4) a vector of feature parameters, said feature parameters extracted from the images comprised in the segmented areas comprise a parameter which relates the surface and the perimeter of the segmented area.

## Patentansprüche

1. Verfahren zur Feststellung und Erkennung von Logos in einem Videodatenstrom, welches folgenden Schritt umfasst:
- Abtasten (1) von Frames des Videodatenstromes mit einer Abtastfrequenz;
**dadurch gekennzeichnet, dass** dies folgende Schritte umfasst:
- für jeden abgetasteten Frame, Segmentieren derjenigen Bereiche innerhalb des Frames, die eine regelmäßige geometrische Form aufweisen;
- für jeden segmentierten Bereich, Erzeugen (4) eines Vektors von Merkmalsparametern, dessen Elemente numerische Werte sind, die Merkmalsparameter extrahiert aus einem Bild enthalten in dem segmentierten Bereich in dem abgetasteten Frame aufweisen;
- Bestimmen (5), ob das Bild enthalten in dem segmentierten Bereich einem Logo entspricht, in Abhängigkeit von der Distanz zwischen dem Vektor von Merkmalsparametern des Bildes und einem Satz von Vektoren, deren Elemente numerische Werte der Merkmalsparameter extrahiert für jedes Logo aus einem Satz von Referenzlogos sind, wobei der Satz von Vektoren in einer Datenbank (8) gespeichert ist;
wobei der Schritt des Abtastens (1) einen Schritt des Zeitmanagements beinhaltet, der dynamisch, abhängig von einer verstrichenen Zeit zwischen dem Schritt des Abtastens von Frames und dem Schritt des Bestimmens, ob die Bilder enthalten in den segmentierten Bereichen einem Logo entsprechen, die Abtastfrequenz modifiziert.

2. Verfahren nach Anspruch 1, **dadurch gekennzeichnet, dass** es ferner einen Schritt des Vorverarbeitens (2) der abgetasteten Frames mit Hilfe von Kantenschärfungs- und Rauschunterdrückungsfiltern vor dem Schritt des Segmentierens der Bereiche mit regelmäßigen geometrischen Formen umfasst.

3. Verfahren nach einem der Ansprüche 1 bis 2, **dadurch gekennzeichnet, dass** es ferner einen Schritt bestehend aus dem Speichern (6) eines Namens des Logos und eines Zeitcodes, der eine Zeit anzeigt, zu welcher der Frame in dem Videodatenstrom erscheint, in Speichermitteln (9) für jeden Frame, in dem bestimmt wird, dass ein Bild enthalten in einem segmentierten Bereich des Frames einem Logo entspricht, umfasst.

4. Verfahren nach Anspruch 3, **dadurch gekennzeichnet, dass** es ferner einen Schritt des Zeitmanagements (7) beinhaltet, welcher dynamisch die Abtastungsfrequenz in Abhängigkeit von einer verstrichenen Zeit zwischen dem Schritt des Abtastens (1) von Frames und dem Schritt des Speicherns (6) des Namens des Logos und des Zeitcodes in Speichermitteln (9) modifiziert.

5. Verfahren nach einem der vorhergehenden Ansprüche, **dadurch gekennzeichnet, dass** beim Schritt des Abtastens (1) von Frames mindestens ein Frame jeder Szene des Videodatenstroms abgetastet wird, deren Dauer länger als ein Dauer-Schwellenwert ist.

6. Verfahren nach einem der vorhergehenden Ansprüche, **dadurch gekennzeichnet, dass** beim Schritt des Segmentierens (3) von Bereichen mit regelmäßigen geometrischen Formen die Bereiche mit regelmäßigen geometrischen Formen mindestens Bereiche in Form von Kreisen, Ellipsen und Rechtecken sind.

7. Verfahren nach Anspruch 6, **dadurch gekennzeichnet, dass** beim Schritt des Segmentierens (3) von Bereichen mit regelmäßigen geometrischen Formen die Bereiche in Form von Kreisen zuerst segmentiert werden, die Bereiche in Form von Ellipsen als zweites, und die Bereiche in Form von Rechtecken als drittes.

8. Verfahren nach einem der vorhergehenden Ansprüche, **dadurch gekennzeichnet, dass** beim Schritt des Erzeugens (4) eines Vektors von Merkmalsparametern die Merkmalsparameter der Bildes enthalten in den segmentierten Bereichen einen Indikator der geometrischen Form des segmentierten Bereiches umfassen.

9. Verfahren nach Anspruch 8, **dadurch gekennzeichnet, dass** zum Berechnen der Ähnlichkeit zwischen den Merkmalsparametern der Bilder enthalten in den segmentierten Bereichen und Referenzwerten der gleichen Merkmalsparameter für Logos von Marktmarken enthalten in einer Datenbank (8), bei der Durchführung der Klassifizierung zum Bestimmen, welches Logo ein mögliches Logo festgestellt in dem segmentierten Bereich ist, ein Gewicht zu dem Indikator der geometrischen Form des segmentierten Bereiches zugewiesen wird, das größer ist als Gewichte zugewiesen zu den übrigen Merkmalsparametern des Bildes.

10. Verfahren nach einem der vorhergehenden Ansprüche, **dadurch gekennzeichnet, dass** beim Schritt des Erzeugens (4) eines Vektors von Merkmalsparametern die Merkmalsparameter der Bilder enthalten in den segmentierten Bereichen mittlere und Varianzwerte von Parametern umfassen, die eine Farbe von Pixeln enthalten in den segmentierten Bereichen definieren.

11. Verfahren nach einem der vorhergehenden Ansprüche, **dadurch gekennzeichnet, dass** beim Schritt des Erzeugens (4) eines Vektors von Merkmalsparametern die Merkmalsparameter extrahiert aus den Bildern enthalten in den segmentierten Bereichen ein Maß der Entropie des Bildes umfassen.

12. Verfahren nach einem der vorhergehenden Ansprüche, beim Schritt des Erzeugens (4) eines Vektors von Merkmalsparametern **dadurch gekennzeichnet, dass** die Merkmalsparameter der Bilder enthalten in den segmentierten Bereichen Vektoren umfassen, die Deskriptoren von Merkmalspunkten der Bilder erhalten mit Hilfe eines SIFT-Algorithmus enthalten, wobei die Dimension der Vektoren, die Deskriptoren enthalten, mit Hilfe einer Hauptkomponentenanalyse verringert wird.

13. Verfahren nach einem der vorhergehenden Ansprüche, **dadurch gekennzeichnet, dass** beim Schritt des Erzeugens (4) eines Vektors von Merkmalsparametern die Merkmalsparameter extrahiert aus den Bildern enthalten in den segmentierten Bereichen einen Parameter umfassen, der sich auf die Oberfläche und den Umfang des segmentierten Bereiches bezieht.

## Revendications

1. Procédé de détection et de reconnaissance de logos dans un flux de données vidéo comportant les étapes consistant à :
- balayer (1) des cadres du flux de données vidéo avec une fréquence de balayage,
**caractérisé en ce qu'**
il comporte les étapes consistant à :
- pour chacun des cadres balayés, segmenter dans le cadre les surfaces ayant une forme géométrique régulière,
- pour chacune des surfaces segmentées, former (4) un vecteur de paramètres caractéristique dont les éléments sont des valeurs numériques ayant des paramètres caractéristiques extraits d'une image comprise dans la surface segmentée dans le cadre balayé,
- déterminer (5) si l'image comprise dans la surface segmentée correspond à un logo en fonction de la distance entre le vecteur de paramètres caractéristique de l'image et un jeu de vecteurs dont les éléments sont des valeurs numériques des paramètres caractéristiques extraits pour chacun des logos à partir d'un jeu de logos de références, ce jeu de vecteurs étant stocké dans une base de données (8),
l'étape de balayage (1) comportant une étape de gestion du temps qui modifie de manière dynamique la fréquence de balayage en fonction du temps écoulé entre l'étape de balayage des cadres et l'étape consistant à déterminer si les images comprises dans les surfaces segmentées correspondent à un logo.

2. Procédé conforme à la revendication 1,
**caractérisé en ce qu'**
il comporte en outre une étape consistant à prétraiter (2) les cadres balayés au moyen de filtres de soulignage des contours et de réduction de bruit, avant l'étape de segmentation des surfaces ayant des formes géométriques régulière.

3. Procédé conforme à l'une quelconque des revendications 1 et 2,
**caractérisé en ce qu'**
il comporte en outre une étape consistant à stocker (6) dans des moyens de stockage (9), pour chacun des cadres dans lesquels il a été déterminé qu'une image comprise dans une surface segmentée de ce cadre correspond à un logo, le nom de ce logo et un code chronologique indiquant l'instant auquel ce cadre apparaît dans le flux de données vidéo.

4. Procédé conforme à la revendication 3,
**caractérisé en ce qu'**
il comporte en outre une étape de gestion du temps (7) qui modifie de manière dynamique la fréquence de balayage en fonction du temps écoulé entre l'étape de balayage (1) de cadres et l'étape consistant à stocker (6) dans des moyens de stockage (9) le nom du logo et son code chronologique.

5. Procédé conforme à l'une quelconque des revendications précédentes,
**caractérisé en ce que**
pendant l'étape de balayage (1) de cadres, au moins un cadre de chacune des scènes du flux de données vidéo, dont la durée est supérieure à un seuil de durée est balayé.

6. Procédé conforme à l'une quelconque des revendications précédentes,
**caractérisé en ce que**
lors de l'étape de segmentation (3) de surfaces ayant des formes géométriques régulières, ces surfaces ayant des formes géométriques régulières sont au moins des surfaces ayant la forme de cercles, d'ellipses ou de rectangles.

7. Procédé conforme à la revendication 6,
**caractérisé en ce que**
pendant l'étape de segmentation (3) de surfaces ayant des formes géométriques régulières, les surfaces ayant la forme de cercles sont segmentées en premier lieu, les surfaces ayant la forme d'ellipses sont segmentées en second lieu et les surfaces ayant la forme de rectangles sont segmentées en troisième lieu.

8. Procédé conforme à l'une quelconque des revendications précédentes,
**caractérisé en ce que**
pendant l'étape (4) consistant à former un vecteur de paramètres caractéristiques, ces paramètres caractéristiques des images comprises dans les surfaces segmentées renferment un indicateur de la forme géométrique des surfaces segmentées.

9. Procédé conforme à la revendication 8,
**caractérisé en ce que**
pour calculer la similitude entre les paramètres caractéristiques des images comprises dans les surfaces segmentées et des valeurs de référence de ces mêmes paramètres caractéristiques pour des logos de marques de marché comprise dans une base de données (8), un poids est attribué lors de la mise en oeuvre de la classification pour déterminer quel logo détecté dans la surface segmentée, est un logo possible à l'indicateur de la forme géométrique de la surface segmentée, qui est supérieur aux poids attribués au paramètres caractéristiques restants de cette image.

10. Procédé conforme à l'une quelconque des revendications précédentes,
**caractérisé en ce que**
lors de l'étape consistant à former (4) un vecteur de paramètres caractéristiques, ces paramètres caractéristiques des images comprises dans les surfaces segmentées comportent des valeurs moyennes et des valeurs de la variance de paramètres définissant une couleur de pixels compris dans les surfaces segmentées.

11. Procédé conforme à l'une quelconque des revendications précédentes,
**caractérisé en ce que**
lors de l'étape consistant à former (4) un vecteur de paramètres caractéristiques, les paramètres caractéristiques extraits des images comprises dans les surfaces segmentées comportent une mesure de l'entropie de cette image.

12. Procédé conforme à l'une quelconque des revendications précédentes,
**caractérisé en ce que**
lors de l'étape consistant à former (4) un vecteur de paramètres caractéristiques, ces paramètres caractéristiques des images comprises dans les surfaces segmentées comportent des vecteurs renfermant des descripteurs de points caractéristiques des images obtenues au moyen d'un algorithme SIFT, la dimension de ces vecteurs renfermant des descripteurs étant réduite par une analyse en composantes principales.

13. Procédé conforme à l'une quelconque des revendications précédentes,
**caractérisé en ce que**
lors de l'étape consistant à former (4) un vecteur de paramètres caractéristiques, ces paramètres caractéristiques extraits des images comprises dans les surfaces segmentées comportent un paramètre qui indique la surface et le périmètre de la surface segmentée.
